# EUROPEAN PATENT SPECIFICATION

(11) **EP 4 548 759 B1**
(45) Date of publication and mention of the grant of the patent: **02.12.2026**
(21) Application number: 24193684.8
(22) Date of filing: 08.08.2024
(51) Int. Cl.: A01K 97/00, A47C 7/62, F16M 13/02, A01K 97/22

(54) **RELEASABLE ACCESSORY SYSTEM**
LÖSBARES ZUBEHÖRSYSTEM
SYSTÈME D'ACCESSOIRE AMOVIBLE

(30) Priority: 03.11.2023 GB 202316908
(43) Date of publication of application: 07.05.2025
(60) Divisional application: 26213655.9
(73) Proprietor: Korda Developments Limited, Basildon, Essex SS14 0HW (GB)
(72) Inventor: Rooney, Adam, Higham on the Hill, CV13 6AD (GB); Wolff, James Lewis, Warminster, BA12 6LS (GB)
(74) Representative: Perlmutter, Jonathan

(56) References cited:
- WO-A1-2019/165090
- CN-U- 205 559 454
- CN-U- 206 112 457
- JP-B2- 4 150 105

## Description

This invention relates to a releasable accessory system for a seat box, as used in fishing.

Seat boxes are popular in fishing and in particular coarse fishing and more particularly match fishing where anglers are under time pressure to catch the most fish or the heaviest fish within a set time limit. Seat boxes contain a seat, which may be padded, for the angler to sit on whilst fishing and will include also an assortment of trays, drawers and compartments for storing tackle for easy transport and use. Most seat boxes will be mounted on at least four legs positioned at respective corners of the seat. The legs will generally be slidably mounted in brackets positioned at each corner of the seat so that the extent to which each leg extends beneath the seat can be adjusted to either raise or lower the seat and also to account for uneven ground. For example, if an angler is fishing on uneven ground the lengths of each of the legs can be adjusted so that the seat is level. Seat boxes often further comprise a footrest comprising two further legs, the length of which can also be adjusted. Such legs may in use extend into the water.

Seat box legs, whilst needing to be long enough to extend to a desired distance beneath the seat will also extend upwardly up to at least the level of the seat and provide a convenient mooring post on which an angler can attach various accessories such as rod rests, bait stations, feeder arms, keep nets and the like. These accessories are usually attachable to the legs with clamps that normally comprise two to four claws adjustable via a thread so that they can be loosened and tightened around the seat box legs. Such clamps can damage and mark the outside of the legs and it can take considerable time to adjust and position the accessories. This can be a problem during timed events such as match fishing where the angler may wish to move all of their equipment from one side of the seat box to the other, which will require them to undo each clamp and then move them to the other side of the seat box before re-attaching them. Moving and reattaching the accessories therefore wastes valuable time. There is a need therefore for an alternative system which enables quick release and reattachment of accessories to seat boxes.

CN205559454U in the name of Anho Houseware Co. Limited describes a connection device for mounting accessories to a pipe. WO2022/202798 in the name of Asahi Industry Corporation describes a pipe connector. US9927063B2 in the name of Keller describes a two-part attachment system for a boat dock. CN213939403U in the name Wang Shuzhen describes a quick release mechanism for a fishing accessory. JP4150105B2 in the name of Shinki Gosei KK describes a releasable accessory system according to the preamble of claim 1.

Therefore, according to the present invention defined in claim 1, there is provided a releasable accessory system for a seat box comprising legs, the system comprising a sleeve, the sleeve being disposable about a leg of the seat box, the sleeve comprising opposed side edges separated by a gap, an inner surface of the sleeve defining an inner region in which the leg is disposed in use, the opposed side edges each comprising a flange; wherein the flanges are tapered; an accessory for releasable connection to the sleeve, the accessory comprising a mating portion shaped to slidably engage the flange of each side edge of the sleeve so that the sleeve grips the leg when the mating portion is engaged; characterised in that the system further comprises a deformable insert disposed adjacent the inner surface of the sleeve, the deformable insert comprising an inner surface defining an inner region in which the leg is disposed in use.

The sleeve can easily be snapped or slid onto the appropriate seat box leg and then secured in place using the mating portion of the accessory. The mating portion may compress the sleeve when engaged, causing the sleeve to grip the leg to secure the accessory in place. The mating portion can also easily be slidably disengaged from the sleeve so that the accessory can be removed and the sleeve can then either be relocated to a different leg or repositioned on the same leg. Additionally, or alternatively, a plurality of sleeves may be provided so that at least one sleeve is provided for each leg and the accessory can be swapped across from one sleeve to another. The sleeve may, when disengaged from the mating portion, be biased so as to grip the leg gently so that the sleeve will not fall the from the leg when the accessory has been removed but still be easily movable. The sleeve may comprise a single piece, or may be at least two pieces hingedly joined to permit simple attachment and reattachment to a leg. If the sleeve comprises a single piece, it may be made from a resiliently deformable material such as metal or a plastics material so that the sleeve may be biased to retain the sleeve on the leg even when the mating portion has not been engaged. The sleeve may be of a uniform thickness, and be resiliently deformable about the whole of the sleeve.

The accessory system further comprises a deformable insert disposed adjacent the inner surface of the sleeve. The deformable insert could be made from a deformable material such as polyurethane foam. The deformable insert acts to prevent any damage to the leg when the sleeve is tightened around it, and to be compressible if the sleeve is squeezed by the mating portion of the accessory when it is engaged. The inner region of the deformable insert may have a cross-section which is rectangular, elliptical or round or any other shape that mirrors the cross-sectional profile of the leg. The size and shape of seat box legs made by different manufacturers may vary, so a range of deformable inserts may be provided with different cross-sectional shapes of inner region so that a single sleeve and accessory can be used with a range of different seat boxes. Additionally, or alternatively, a releasable accessory system according to the present invention may be supplied with a deformable insert shaped for particular manufacturer specifications.

The deformable insert may be tubular comprising outer walls and an inner region that mirrors the shape of the leg and may further comprise an open sleeve comprising opposed side edges defining a gap, the size of which mirrors the gap of the sleeve. If the deformable insert comprises a gap, then the deformable insert and the sleeve can be snapped onto a seat box leg through the gap.

The outer surface of the deformable insert may comprise a projection, and the inside surface of the sleeve may comprise an indent corresponding and engageable with the projection. The projection may comprise a rib that extends around the outer surface of the deformable insert. The projection may engage with the indent of the sleeve so that movement of the sleeve up and down a seat box leg does not result in a disassociation between the sleeve and the deformable insert and therefore enables the deformable insert to move with the sleeve.

The flanges of the sleeve may comprise a first portion extending from each side edge and away from the inner region of the sleeve, and a second portion extending from an end of the first portion back towards the sleeve but away from the adjacent flange. The flanges may extend the whole length of the side edges of the sleeve. The side edges of the sleeve and the first portions of the flanges may be parallel, and when disposed on a seat box leg may be disposed substantially parallel with the length of the leg. The flanges may be tapered and in particular the second portion of the flanges may be tapered and increase in width along the length of the flange. In particular, the flanges may taper so as to broaden along the length of the sleeve. If the sleeve is attached to a vertically disposed leg, the sleeve may be disposed so that the flanges broaden towards a lower end of the sleeve. Therefore, a user may lower the mating portion down into the sleeve and in doing so the taper of the flanges causes the sleeve to tighten to the leg as the mating portion is applied.

The mating portion may comprise side walls to surround the flanges of the sleeve, an upper wall to abut an upper surface of the flanges and an open base to slidably receive the flanges. The upper wall may abut the upper surface of the flanges when engaged to prevent the mating portion and accessory from dropping down and off the sleeve, and also to inform the user that the accessory is properly engaged with the sleeve.

The side walls and upper wall of the mating portion of the sleeve may be shaped substantially the same as the flanges to permit engagement of the mating portion with the sleeve. If the second portion of the flanges are tapered, then the side walls of the mating portion may either not be tapered, or be tapered to a lesser extent than the second portion of the flanges. If there is tapering, sliding the mating portion onto the flanges will cause the flanges to pinch together and the gap between the side edges to narrow which will result in the sleeve gripping the leg of the seat box firmly. The deformable insert, if present, will also compress.

The outside surface of the flanges may further comprise a projection and the inside surface of the mating portion may comprise a corresponding indent or aperture, so when the mating portion has fully engaged with the sleeve, the projection engages with the indent or aperture. The user may be provided with some visual, aural or haptic feedback to indicate that the mating portion is fully engaged with the sleeve as there may be a corresponding audible click or vibration when the indent or aperture engages with the projection. Alternatively, a ratchet system may be provided so that the mating portion, when it is engaged with the flanges when sliding it on, may result in a series of clicks whereby each progressive movement of the ratchet further tightens the sleeve around the leg.

The side walls of the mating portion may comprise at least one aperture to access the or each flange when engaged. A user may therefore be able to squeeze the flanges through the aperture to further tighten the sleeve but at the same time loosen the grip of the mating portion and allow the accessory to be removed from the sleeve. The accessory may extend from the side walls of the mating portion and, for example, may be on the end of a shaft. The accessory may comprise a tray, a bait station, a feeder arm, a rod rest, a fishing pole support or a keep net. A single accessory such as a bait station or tray may comprise two mating portions to engage with a pair of sleeves on adjacent legs to provide further support for the accessory.

So that it may be better understood, embodiments of the present invention will now be described in detail but by way of example only wherein:
Figure 1 shows a schematic representation of a seat box and a releasable accessory system according to the present invention;
Figure 2 shows an exploded view of the releasable accessory system according to the present invention;
Figure 3a shows the releasable accessory system of Figure 2 connected to a seat box leg;
Figure 3b shows the releasable accessory system of Figure 3a disconnected from the seat box leg;
Figure 4a shows an alternative accessory system connected to a different seat box leg;
Figure 4b shows the alternative accessory system of Figure 4a disconnected from the seat box leg;
Figure 5a shows a rear view of an alternative releasable accessory system; and
Figure 5b shows a perspective view of the alternative releasable accessory system of Figure 5a.

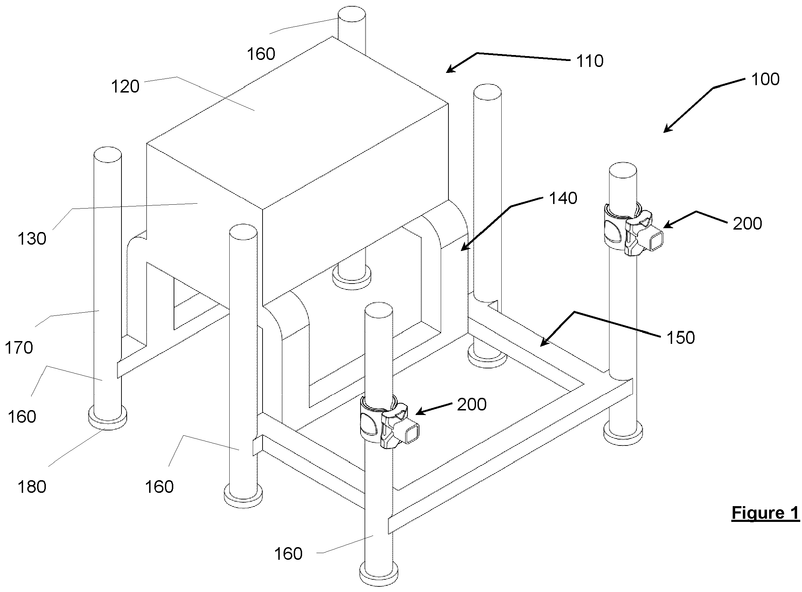

Turning first to Figure 1, there is shown a schematic representation of a seat box generally indicated 100 comprising a seat generally indicated 110 comprising an upper surface 120 which may bear a cushion or other form of padding for an angler to sit on during use. The seat 110 further comprises a housing 130 which may comprise compartments or drawers for storing fishing tackle and the like. In some embodiments, the upper surface 120 of the seat 110 may be hinged to the housing 130 to access the interior of the housing 130. The seat box 100 comprises a seat frame, generally indicated 140, upon which seat 110 is mounted and a foot rest frame, generally indicated 150, which may optionally bear a solid foot rest. Extending from seat frame 140 and foot rest frame 150 are six legs generally indicated 160. Each leg 160 comprises a cylindrical pole 170 and a foot 180. Although not shown in the schematic representation, each leg 160 is slidable within frames 140, 150 in order to adjust the height of the seat box 100 or to ensure that the seat box 100 is stable on uneven ground. The legs may be secured to and be slidable within the frames 140, 150 by any known suitable mechanism including being slidable within a sleeve lockable by a clamp or other such device.

Each leg extends up beyond each frame 140, 150 at least to the height of the upper surface 120 of the seat 110 and this is to permit attachment of accessories to the legs 160 for use by an angler. Such accessories can include trays, bait stations, feeder arms, rod rests, fishing pole supports, keep nets and the like. As shown in Figure 1, releasable accessory systems generally indicated 200 are attached to the legs 160 connected to the footrest frame 150, and may further be connected to each of the legs 160.

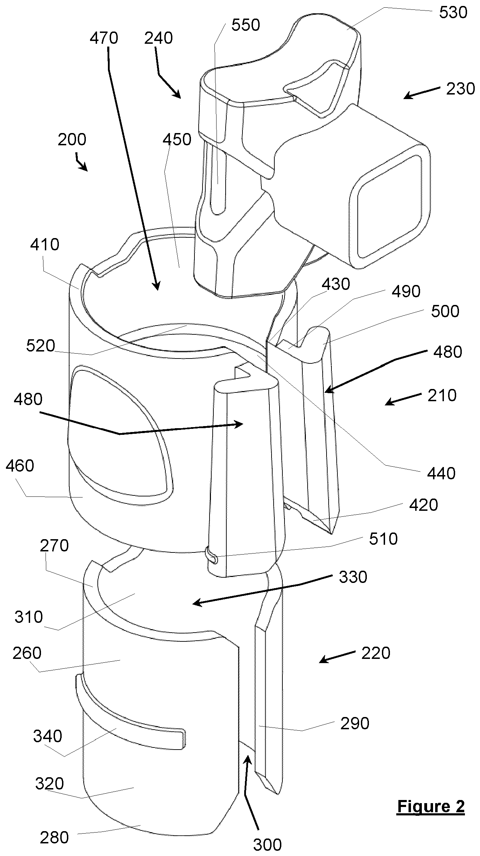

Figure 2 shows an exploded view of a releasable accessory system 200. There is shown a sleeve generally indicated 210, a deformable insert generally indicated 220 and an accessory generally indicated 230. The accessory 230 comprises a mating portion generally indicated 240 and an arm generally indicated 250. The arm 250 may comprise a fixing post for attaching an accessory, or may extend into the accessory itself such as the rod rest, feeder arm, etc, which is not shown here. The mating portion 240 is therefore common to each accessory.

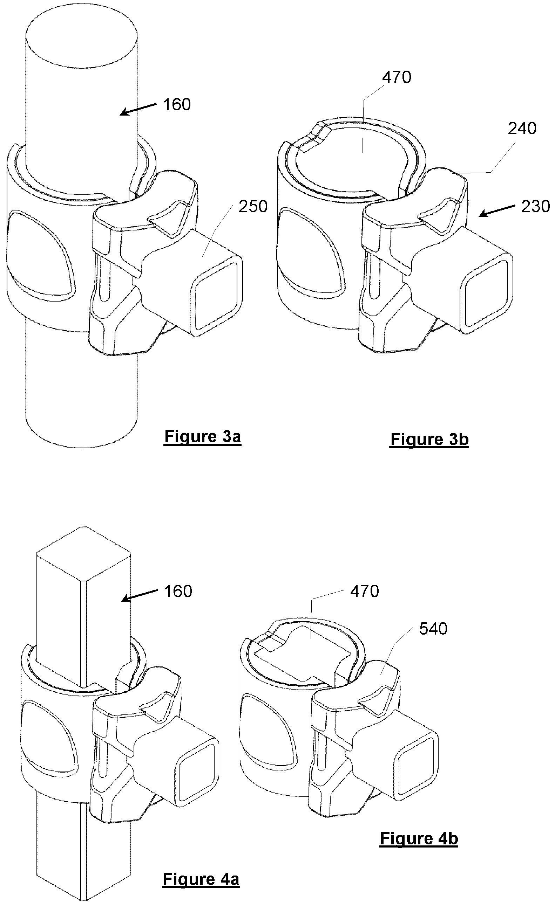

The deformable insert 220 comprises a cylindrical sleeve 260 which comprises upper and lower edges, 270, 280, opposed side edges 290 which define a gap 300, an inner surface 310 and an outer surface 320. The inner surface 310 defines an inner region 330. As shown, for example, in Figures 3a and 4a, a leg 160 of a seat box 100 is disposable within the inner region 330 in use. The cylindrical sleeve 260 is made from a deformable material such as polyurethane. The outer surface 320 of the cylindrical sleeve 260 comprises a projection 340 which in this example comprises a rib extending at least partially around the periphery of the outer surface 320.

Sleeve 210 comprises upper and lower side edges 410, 420, opposed side edges 430 separated by a gap 440, an inner surface 450 and an outer surface 460. The inner surface 450 of the sleeve 210 and the gap 440 define an inner region 470 in which the deformable insert 220 is disposed in use. The side edges 430 of the sleeve 210 each define a flange generally indicated 480. Each flange 480 comprises a first portion 490 which extends from the side edges 430 and away from the outer surface 460 and a second portion 500 which folds back towards the outer surface 460 but away from the adjacent flange 480. The distance between adjacent flanges 480 and therefore the gap 440 between them remains consistent across the length of the flange 370. The second portion 500 of each flange 480 is tapered so as the flange 480 extends down the sleeve 210 the second portion 500 gets wider. At an outer edge of the flange 480 is projection 510.

The inner surface 450 of the sleeve 210 comprises an indent 520 which corresponds with projection 340 on the outer surface 320 of the deformable insert 220. When the deformable insert is engaged within the sleeve 210, as for example shown in Figures 3b, 4b and 5b, the projection 340 is engaged with the indent 520.

The mating portion 240 of the accessory 230 comprises side walls 530 which are shaped to surround the flanges 480 of the sleeve 210 and further comprises an upper wall 540 and an open base (not shown). The side walls 530 of the mating portion 240 comprise an indent (not shown) to correspond with projection 510 on the second portion 500 of the flanges 480. Engagement of the mating portion 240 with the flanges 480 causes the projection 510 to snap into the indent to provide audible, or haptic feedback to the user that the accessory 230 is properly engaged with the sleeve 210.

Side walls 530 of the mating portion 240 further comprise apertures 550 to permit access to the flanges 480 by a user to remove the accessory 230 from the sleeve 210 by squeezing the flanges 480 together.

As shown in Figures 3a, 3b and Figures 4a,4b the deformable insert 220 may have an inner region 470 of different shape to fit legs 160 of different shape.

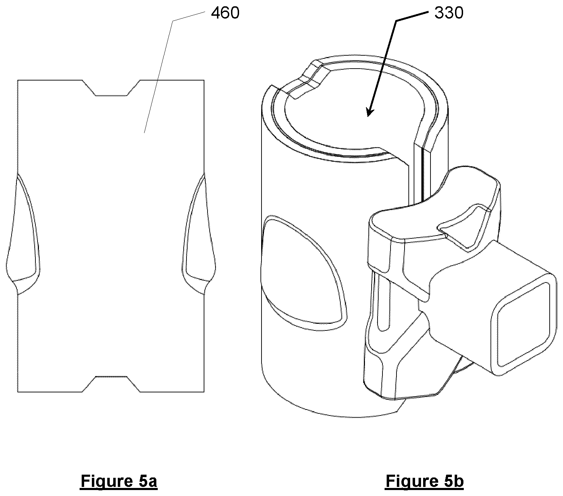

The sleeve 210 and deformable insert 220 may be provided in different lengths so that if a heavier accessory is to be attached to the legs 160 of the seat box 100 a longer sleeve 210 and deformable insert 220, such as that shown in Figures 5a and 5b may be used instead.

With reference to all Figures, an angler may set up a seat box 100 according to Figure 1, and can adjust the height and/or level of their seat 110 by adjusting the lengths of each of the legs 160. The angler may then connect a releasable accessory system 200 to one of the legs 160. Firstly, they slide a sleeve 210 and nested deformable insert 220 over the top of the leg 160 and slide the sleeve 210 and deformable insert 220 into the desired position. To secure the sleeve 210 and deformable insert 220 into position and attach an accessory 230, the angler locates the base of the mating portion 240 over the top of the flanges 480 of the sleeve 210, and slides the mating portion 240 down the flanges 480. The side edges of the flanges 480 contact the side walls 530 of the mating portion, and since the second portion 500 is tapered and widens down the length of the flange 480, as the mating portion is drawn down the flanges 480 are squeezed together and the gap 440 narrows. This has the effect of compressing the deformable insert 220 and tightening the sleeve 210 to the seat box leg 160. Projection 510 then clicks into respective indent in the side walls 530 of the mating portion 230 to inform the angler that the mating portion 530 and accessory 230 has been properly installed.

If the angler wishes to remove the accessory 230 or to move it to a different leg 160, for example if they are changing the position where they are fishing, the they squeeze the flanges 480 through aperture 550 of the mating portion 240. The mating portion 240 and accessory 230 can then be lifted from the flanges 480. The sleeve 210 and deformable insert can now either be moved to a different leg, or the accessory 230 can be moved to a different sleeve 210.

## Claims

1. A releasable accessory system for a seat box (100) comprising legs (160), the system comprising:
a sleeve (210), the sleeve (210) being disposable about a leg (160) of the seat box (100), the sleeve (210) comprising opposed side edges (430) separated by a gap (440), an inner surface (450) of the sleeve (210) defining an inner region (470) in which the leg (160) is disposed in use, the opposed side edges (430) each comprising a flange (480), wherein the flanges (480) are tapered;
an accessory (230) for releasable connection to the sleeve (210), the accessory (230) comprising a mating portion (240) shaped to slidably engage the flange (480) of each side edge (430) of the sleeve (210) so that the sleeve (210) grips the leg (160) when the mating portion (240) is engaged;
**characterised in that** the system further comprises a deformable insert (220) disposed adjacent the inner surface (450) of the sleeve (210), the deformable insert (220) comprising an inner surface (310) defining an inner region (330) in which the leg (160) is disposed in use.

2. A system as claimed in claim 1, wherein the inner region (330) of the deformable insert (220) has a cross section that is rectangular, elliptical, or round.

3. A system as claimed in claim 1 or claim 2, wherein an outer surface (320) of the deformable insert (220) comprises a projection (340), and the inside surface (450) of the sleeve (210) comprises an indent (520) corresponding and engageable with the projection (340).

4. A system as claimed in any preceding claim, wherein the flanges (480) comprise each a first portion (490) extending from each side edge (430) and away from the inner region (470) of the sleeve (210), and a second portion (500) extending from an end of the first portion (490) back towards the sleeve (210) but away from the adjacent flange (480).

5. A system as claimed in claim 4, wherein the second portion (500) of the flanges (480) are tapered and increase in width along the length of the flange (480).

6. A system as claimed in any preceding claim, wherein an outside surface of the flanges (480) further comprises a projection (510) and the inside surface of the mating portion (240) comprises a corresponding indent or aperture, so when the mating portion (240) has fully engaged with the sleeve (210), the projection (510) engages with the indent or aperture.

7. A system as claimed in any preceding claim, wherein the mating portion (250) comprises side walls (530) to surround the flanges (480) of the sleeve (210), an upper wall to abut an upper surface of the flanges and an open base to slidably receive the flanges.

8. A system as claimed in claim 7 wherein the side walls (530) of the mating portion (240) comprise at least one aperture (550) to access the or each flange (480) when engaged.

9. A system as claimed in claim 7 or claim 8, wherein the accessory (230) extends from the side walls (530) of the mating portion (240).

10. A system as claimed in claim 9, wherein the accessory (230) comprises a tray, a bait station, a feeder arm, a rod rest, a fishing pole support or a keep net.

11. A system as claimed in any preceding claim, wherein the sleeve (210) is of a uniform thickness, and is resiliently deformable about the whole of the sleeve (210).

## Patentansprüche

1. Freigebbares Zubehörsystem für eine Sitzbox (100) mit Beinen (160), wobei das System umfasst:
eine Hülse (210), wobei die Hülse (210) über ein Bein (160) der Sitzbox (100) anordenbar ist, wobei die Hülse (210) gegenüberliegende Seitenkanten (430) umfasst, die durch einen Spalt (440) voneinander getrennt sind, wobei eine Innenfläche (450) der Hülse (210) einen Innenbereich (470) definiert, in dem das Bein (160) im Gebrauch angeordnet ist, wobei die gegenüberliegenden Seitenkanten (430) jeweils einen Flansch (480) umfassen, wobei die Flansche (480) verjüngt ausgebildet sind;
ein Zubehörteil (230) zur lösbaren Verbindung mit der Hülse (210), wobei das Zubehörteil (230) einen Gegenabschnitt (240) umfasst, der dazu ausgebildet ist, mit dem Flansch (480) jeder Seitenkante (430) der Hülse (210) gleitend in Eingriff zu treten, sodass die Hülse (210) das Bein (160) umgreift, wenn der Gegenabschnitt (240) in Eingriff steht;
**dadurch gekennzeichnet, dass** das System ferner einen verformbaren Einsatz (220) umfasst, der angrenzend an die Innenfläche (450) der Hülse (210) angeordnet ist, wobei der verformbare Einsatz (220) eine Innenfläche (310) umfasst, die einen Innenbereich (330) definiert, in dem das Bein (160) im Gebrauch angeordnet ist.

2. System nach Anspruch 1, wobei der Innenbereich (330) des
verformbaren Einsatzes (220) einen Querschnitt aufweist, der rechteckig, elliptisch oder rund ist.

3. System nach Anspruch 1 oder Anspruch 2, wobei eine Außenfläche (320) des verformbaren Einsatzes (220) einen Vorsprung (340) umfasst und die Innenfläche (450) der Hülse (210) eine Vertiefung (520) umfasst, die dem
Vorsprung (340) entspricht und mit diesem in Eingriff bringbar ist.

4. System nach einem der vorhergehenden Ansprüche, wobei die Flansche (480) jeweils umfassen:
einen ersten Abschnitt (490), der sich von jeder Seitenkante (430) und von dem Innenbereich (470) der Hülse (210) weg erstreckt, und einen zweiten
Abschnitt (500), der sich von einem Ende des ersten Abschnitts (490) zurück zur Hülse (210), jedoch von dem jeweils benachbarten Flansch (480) weg, erstreckt.

5. System nach Anspruch 4, wobei die zweiten Abschnitte (500) der Flansche (480) verjüngt ausgebildet sind und sich entlang der Länge des Flansches (480) in ihrer Breite vergrößern.

6. System nach einem der vorhergehenden Ansprüche, wobei eine Außenfläche der Flansche (480) ferner einen Vorsprung (510) umfasst und die Innenfläche des Gegenabschnitts (240) eine entsprechende Vertiefung oder Öffnung umfasst, sodass, wenn
der Gegenabschnitt (240) vollständig mit der Hülse (210) in Eingriff getreten ist, der Vorsprung (510) mit der Vertiefung oder Öffnung in Eingriff steht.

7. System nach einem der vorhergehenden Ansprüche, wobei der Gegenabschnitt (240) Seitenwände (530) umfasst, um die Flansche (480) der Hülse (210) zu umgeben, eine obere Wand, um an einer oberen Fläche der Flansche anzuliegen, sowie eine offene Basis, um die Flansche gleitend aufzunehmen.

8. System nach Anspruch 7, wobei die Seitenwände (530) des Gegenabschnitts (240) mindestens eine Öffnung (550) umfassen, um bei in Eingriff stehendem Zustand Zugang zu dem oder zu jedem Flansch (480) zu ermöglichen.

9. System nach Anspruch 7 oder Anspruch 8, wobei sich das Zubehörteil (230) von den Seitenwänden (530) des Gegenabschnitts (240) aus erstreckt.

10. System nach Anspruch 9, wobei das Zubehörteil (230) ein Tablett, eine Köderstation, einen Futterarm, eine Rutenauflage, eine Halterung für eine Angelrute oder ein Setzkescher umfasst.

11. System nach einem der vorhergehenden Ansprüche, wobei die Hülse (210) eine gleichmäßige Dicke aufweist und über die gesamte Hülse (210) elastisch verformbar ist.

## Revendications

1. Un système d'accessoire amovible pour une caisse-siège (100) comprenant des pieds (160), le système comprenant :
un manchon (210), le manchon (210) étant destiné à être disposé autour d'un pied (160) de la caisse-siège (100), le manchon (210) comprenant des bords latéraux opposés (430) séparés par un espace (440), une surface intérieure (450) du manchon (210) définissant une région intérieure (470) dans laquelle le pied (160) est disposé en utilisation, les bords latéraux opposés (430) comprenant chacun une bride (480), les brides (480) étant effilées ;
un accessoire (230) destiné à une connexion amovible au manchon (210), l'accessoire (230) comprenant une partie d'accouplement (240) configurée pour s'engager de manière coulissante avec la bride (480) de chaque bord latéral (430) du manchon (210) de sorte que le manchon (210) serre le pied (160) lorsque la partie d'accouplement (240) est engagée ;
**caractérisé en ce que** le système comprend en outre un insert déformable (220) disposé adjacent à la surface intérieure (450) du manchon (210), l'insert déformable (220) comprenant une surface intérieure (310) définissant une région intérieure (330) dans laquelle le pied (160) est disposé en utilisation.

2. Système selon la revendication 1, dans lequel la région intérieure (330) de l'insert déformable (220) présente une section transversale rectangulaire, elliptique ou circulaire.

3. Système selon la revendication 1 ou la revendication 2, dans lequel une surface extérieure (320) de l'insert déformable (220) comprend une saillie (340), et la surface intérieure (450) du manchon (210) comprend un évidement (520) correspondant à la saillie (340) et apte à s'y engager.

4. Système selon l'une quelconque des revendications précédentes, dans lequel les brides (480) comprennent chacune :
une première partie (490) s'étendant à partir de chaque bord latéral (430) et à l'écart de la région intérieure (470) du manchon (210), et une seconde partie (500) s'étendant depuis une extrémité de la première partie (490) en retour vers le manchon (210), mais à l'écart de la bride (480) adjacente.

5. Système selon la revendication 4, dans lequel la seconde partie (500) des brides (480) est effilée et augmente en largeur le long de la longueur de la bride (480).

6. Système selon l'une quelconque des revendications précédentes, dans lequel une surface extérieure des brides (480) comprend en outre une saillie (510) et la surface intérieure de la partie d'accouplement 2 ■ (240) ■ 2 comprend un évidement ou une ouverture correspondants, de sorte que lorsque la partie d'accouplement 2 ■ (240) ■ 2 est complètement engagée avec le manchon (210), la saillie (510) s'engage dans l'évidement ou l'ouverture.

7. Système selon l'une quelconque des revendications précédentes, dans lequel la partie d'accouplement (250) comprend des parois latérales (530) destinées à entourer les brides (480) du manchon (210), une paroi supérieure destinée à venir en butée contre une surface supérieure des brides et une base ouverte destinée à recevoir les brides par coulissement.

8. Système selon la revendication 7, dans lequel les parois latérales (530) de la partie d'accouplement 2 ■ (240) ■ 2 comprennent au moins une ouverture (550) permettant d'accéder à la ou à chacune des brides (480) lorsqu'elles sont engagées.

9. Système selon la revendication 7 ou la revendication 8, dans lequel l'accessoire (230) s'étend à partir des parois latérales (530) de la partie d'accouplement 2 ■ (240) ■ 2.

10. Système selon la revendication 9, dans lequel l'accessoire (230) comprend un plateau, une station d'appâtage, un bras d'alimentation, un repose-canne, un support de canne à pêche ou une épuisette.

11. Système selon l'une quelconque des revendications précédentes, dans lequel le manchon (210) présente une épaisseur uniforme et est déformable de manière élastique sur toute l'étendue du manchon (210).
